# EUROPEAN PATENT APPLICATION

(11) **EP 1 748 580 A1**
(43) Date of publication of application: **31.01.2007**
(21) Application number: 05291614.5
(22) Date of filing: 28.07.2005
(51) Int. Cl.: H04B 10/08

(54) **Method for recognizing the integrity of an optical access line**

(71) Applicant: ALCATEL, 75008 Paris (FR)
(72) Inventor: Dr. Pfeiffer, Thomas, 70569 Stuttgart (DE); Dr. Freude, Wolfgang, 76199 Karlsruhe (DE); Prof. Dr. Leuthold, Jürg, 76297 Stutensee-Spöck (DE)
(74) Representative: Brose, Gerhard

(57) **Abstract**

The invention relates to a method for recognizing the integrity of an optical access line (ALN), in which an optical measuring signal is sent from a measuring unit (MU), and that the reflected echoes are searched through for an echo that is characteristic for a reflector (Rfl) applied at the end of the access line (ALN). The invention further relates to an optical system, a tree-shaped access network, a reflector, and an optical transmit and receive unit.

## Description

The invention relates to a method for recognizing the integrity of an optical access line according to the preamble of claim 1, an optical system according to the preamble of claim 2, a tree-shaped access network according to the preamble of claim 3, a measuring unit according to the preamble of claim 4, a reflector according to the preamble of claim 5, and an optical transmit and receive unit according to the preamble of claim 6.

Looking at the present worldwide trend in optical access evolution it is anticipated that the deployment of fiber networks in the access area will substantially increase over the next 5 - 10 years reaching more than one hundred million subscribers worldwide. The major customer base will increasingly consist of residentials and MDUs (Multi Dwelling Units). But also SMEs, banks, insurances and other high-end customers will be connected to the access network by fibers. The prevailing optical network technologies in the near future will be based on different PON (Passive Optical Network) flavors, on point-to-point optical Ethernet and fiber channel links operating at various bit rates and on SONET/SDH links. Some of the existing protocols (e.g. GPON) will presumably be enhanced to support higher bit rates, higher number of subscribers and longer link lengths and to apply WDM techniques. The commercial success of FTTx will be based on cost reductions in the optical access system. Besides cost reductions on the optical components sector an additional major key for further cost reduction lies in the service provisioning and service assurance processes. These processes can be expensive and hard to implement, as they must ensure the same ubiquitous availability and the same high reliability that end customers are used to from the classical telephone network and services.

As a prerequisite for the operator to unbundle the optical network termination (ONT) from the fiber link it is necessary for him to be able to check the integrity of the fiber link up to the customers' premises. In case the fiber breaks in the drop section near the fiber end and in order to be able to distinguish the fiber end from a potentially connected ONT an embedded optical time domain reflectometry (OTDR) in the optical line termination (OLT) may not be sufficient because of its limited spatial resolution.

Instead, a simple integrity check should be performed from the OLT side.

This problem is solved by a method according to the teachings of claim 1, an optical system according to the teachings of claim 2, a tree-shaped access network according to the teachings of claim 3, a measuring unit according to the teachings of claim 4, a reflector according to the teachings of claim 5, and an optical transmit and receive unit according to the teachings of claim 6.

An integrity check unit (ICU), a passive optical circuit located at the entrance point to the customers' premises, may be remotely interrogated from the OLT. If this ICU returns the expected signature, the cabling up to the customer demarcation point (CDP) works properly.

Further embodiments of the invention are to be found in the subclaims and in the following description:

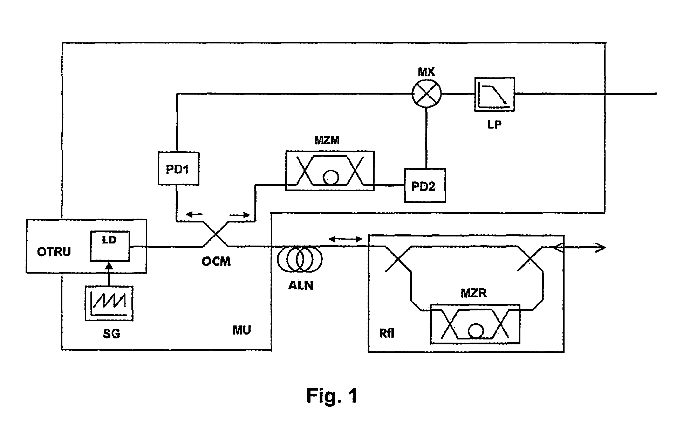

Figure 1 shows a part of an optical system according to the invention, in which the method according to the invention can be carried out. This figure includes a measuring unit according to the invention, a reflector according to the invention and an optical transmit and receive unit according to the invention.

Figure 1 shows an optical transmit and receive unit OTRU, a measuring unit MU, an access line or access network ALN, and a reflector Rfl. Not shown in figure 1 is an optical receiver at the right-hand side of the reflector Rfl.

From the optical transmit and receive unit OTRU only a laser diode LD is shown.

The measuring unit MU includes a saw tooth generator SG, a first optical coupler OCM, a first Mach-Zehnder device MZM, two photo diodes PD1 and PD2, a mixer MX, and a low-pass filter LP.

The access line or access network ALN is schematically depicted as a coil of optical fiber.

The reflector Rfl shows a second and a third optical coupler OCR1 and OCR2, and a second Mach-Zehnder device MZR.

Light coming from the laser diode LD of the optical transmit and receive unit OTRU passes the first optical coupler OCM, the access line or access network ALN, and the second and the third optical coupler OCR1 and OCR2. This happens both, in normal operation and in measuring mode. In normal operation the saw tooth generator SG is not active. The light emitted then has the operating wavelength. The optical couplers OCM, OCR1, and OCR2 are designed such that the transmission loss is low.

The idea behind using a reflector Rfl is to create a condition that cannot occur by chance or by accident. Such condition for example can be the reflection of only one single wavelength out of a wavelength band that can be reached by tuning the laser diode or contrariwise the reflection of all wavelengths but one.

To this end in this example a small part of the light is coupled out by the second optical coupler OCR1, passed through the second Mach-Zehnder device MZR, and passed back through the third optical coupler OCR2 into the direction to the optical transmit and receive unit OTRU. Likewise in this example a small part of the light is coupled out by the third optical coupler OCR2, passed through the second Mach-Zehnder device MZR in the other direction, and passed back through the second optical coupler OCR1 into the direction to the optical transmit and receive unit OTRU.

The Mach-Zehnder device MZR is built in the usual manner with two optical couplers and a delay element in either of the connections between the two couplers. In the given example the delay element should have an optical delta of 180 millimeter resulting in a periodic filter transmission of 1. GHz. Then an input signal swept over the considered wavelength range will result in an output signal at either output with a sinusoidal behavior depending on the sweeping frequency.

If in the so far described example the wavelength of the laser diode is periodically detuned over a range of 40 GHz by means of the saw tooth generator SG with a sweeping frequency of, say, 10 kHz the reflector Rfl will cause an amplitude modulation of the light with 40/1.1 waves within one sweep of 1/10 ms. That is a frequency of 363 KHz. This can be considered to be a typical signature.

Such signed light reflected back and partly, to an only small amount, coupled out by means of the first optical coupler OCM now can be tested on whether it includes such signal with a frequency of 363 kHz. To this end it is converted into an electrical signal by means of the first photo diode PD1.

The signal at the output of the first photo diode PD1 is a very weak one because it passed three optical couplers one after another and each time only to a small extend. So it is not easy to detect.

The detection will even become harder when there is not merely a single optical line with only one reflector but a tree-shaped optical access network with lots of reflectors at the respective ends. In this case each reflector should have a slightly different characteristic; in the case of using Mach-Zehnder devices all delay lines should be of slightly different length. This would mean that the signal at the output of the photo diode PD1 includes a mixture of a couple of sinusoidal signals each differing slightly in frequency from the others.

One way out of this problem is to mix such signals with another sinusoidal signal based on the same saw tooth. In the shown example a signal is used based on a Mach-Zehnder device with a periodicity of 1 GHz. The signal output from this first Mach-Zehnder device, MZM, and converted into an electrical signal, similarly to the above example has a frequency of 400 kHz. The signal at the output of the mixer MX includes as a difference frequency signal in this example a signal with a frequency of 37 kHz, which is filtered out by the low-pass filter LP. In case of more than one reflector at the ends of a tree-shaped access network there will be a corresponding number of similar frequencies to be detected.

The filtering out of any signature is thus traced back to a problem well known in the art.

## Claims

1. Method for recognizing the integrity of an optical access line (ALN), **characterized in, that** an optical measuring signal is sent from a measuring unit (MU), and that the reflected echoes are searched through for an echo that is characteristic for a reflector (Rfl) applied at the end of the access line.

2. Optical system with an optical sender (OTRU), an optical access line (ALN) and an optical receiver, where the optical sender (OTRU) is provided with a measuring unit (MU) for monitoring the optical access line (ALN), **characterized in, that** between the end of the optical access line (ALN) and the optical receiver a reflector (Rfl) is applied, that reflects a part of the light in a characteristic manner back to the optical sender (OTRU), that the optical sender (OTRU) is controllable by the measuring unit (MU) for outputting a measuring signal suitable for the measuring, and that the measuring unit (MU) is designed such that on the one hand it controls the optical sender (OTRU, LD) and on the other hand tests the reflected light for a share that is characteristic for the reflector (Rfl) applied at the end of the access line (ALN).

3. Tree-shaped access network (ALN) with an optical sender (OTRU) at the unbranched end and a multiple of optical receivers at the branched ends, **characterized in, that** a measuring unit (MU) is assigned to the optical sender (OTRU), that between at least one end of the tree-shaped access network (ALN) and the optical receiver out of the multiple of optical receivers attached thereto a reflector (Rfl) is applied that reflects in a manner characteristic for this end, and that the measuring unit (MU) is designed such that on the one hand it controls the optical sender (OTRU, LD) and on the other hand tests the reflected light for a share that is characteristic for either of the reflectors (Rfl) applied at any end of the access network (ALN).

4. Measuring unit (MU) for an optical sender (OTRU), **characterized in, that** it is designed such that on the one hand it controls the optical sender (OTRU, LD) and on the other hand tests the light being reflected back from an access line or access network (ALN) emanating from the optical sender (OTRU, LD) for a share that is characteristic for a reflector (Rfl) applied at the other end of the access line or access network (ALN), respectively.

5. Reflector (Rfl) for an optical system including an optical sender (OTRU), an optical access line or access network (ALN), and an optical receiver, **characterized in, that** it includes an optical line passing the reflector, that it includes an optical coupler for extracting a share of the light entering at one end of the optical line, that it includes signature means (MZR) to sign the extracted share of the line in a characteristic manner, and that it includes an optical coupler to insert the extracted and signed share of the light into the optical line in such a manner that it leaves the optical line at the same end again.

6. Optical transmit and receive unit (OTRU) for connecting a further optical transmit and receive unit via an optical access line or a tree-shaped optical access network (ALN), **characterized in, that** a measuring unit (MU) is assigned to the optical transmit and receive unit OTRU) that is designed such that on the one hand it controls the transmit part of the optical transmit and receive unit (OTRU, LD) and on the other hand tests the light being reflected back for a share that is characteristic for a reflector (Rfl) applied at the other end of the access line or access network (ALN).

7. Reflector according to claim 5, **characterized in, that** it includes a Mach-Zehnder device (MZR) as signature means that suppresses incoming light depending on the wavelength.

8. Measuring unit according to claim 4, when the reflector to be recognized is built according to claim 7, **characterized in, that** it includes a Mach-Zehnder device (MZM) that suppresses incoming light depending on the wavelength, that it further is designed such that it controls the optical sender (OTRU, LD) to periodically sweep (SG) the optical wavelength, that it feeds a part of the light output by the optical sender to the Mach-Zehnder device (MZM), and that it compares the light coming from the Mach-Zehnder device (MZM) with the light being reflected from the access line or access network (ALN).

9. Measuring unit according to claim 8, **characterized in, that** it includes optoelectrical converters (PD1, PD2) for converting the light intensities to be compared into electrical signals, that a mixer (MX) is foreseen to mix these signals, that a low-pass filter (LP) is included for filtering out the difference-frequency mixing product, and that a comparator is included for comparing the mixing product with a given value.
